# EUROPÄISCHE PATENTSCHRIFT

(11) **EP 2 307 878 B1**
(45) Veröffentlichungstag und Bekanntmachung des Hinweises auf die Patenterteilung: **21.03.2018**
(21) Anmeldenummer: 09768891.5
(22) Anmeldetag: 29.05.2009
(51) Int. Cl.: G01N 21/90

(54) **REDUNDANTE INSPEKTION**
REDUNDANT INSPECTION
INSPECTION REDONDANTE

(30) Priorität: 24.06.2008 DE 102008029661
(43) Veröffentlichungstag der Anmeldung: 13.04.2011
(73) Patentinhaber: KHS GmbH, 44143 Dortmund (DE)
(72) Erfinder: BÖCKER, Horst, 58239 Schwerte (DE); WIEMER, Heinrich, 21033 Hamburg (DE)
(86) Internationale Anmeldenummer: PCT/EP2009/003835
(87) Internationale Veröffentlichungsnummer: WO 2009/156042

(56) Entgegenhaltungen:
- WO-A-2006/011803
- DE-A1- 10 164 058
- DE-A1-102006 047 150

## Beschreibung

Die Erfindung betrifft eine Inspektionsvorrichtung zum Kontrollieren von Flaschen oder dergleichen Behälter, umfassend zumindest eine erste Kamera, welche einen definierten Bereich der Flasche oder dergleichen Behälter kontrolliert.

Derartige Flaschen oder dergleichen Behälter können für Flüssigkeiten, beispielsweise für Getränke verwendet werden. Die Behälter können aus einem transparenten oder transluzenten Material, beispielsweise aus Glas oder aus einem transluzenten Kunststoff, z.B. PET bestehen. Die Flaschen oder dergleichen Behälter werden im Leerzustand bevorzugt nach ihrer Reinigung an der Inspektionsvorrichtung vorbeigeführt. Hierzu ist eine Beleuchtungseinrichtung beispielsweise unterhalb der beispielhaften Flasche angeordnet, wobei dazu gegenüberliegend die zumindest erste Kamera angeordnet ist. Die Beleuchtungseinrichtung durchleuchtet die beispielhafte Flasche, so dass die zumindest erste Kamera kontrolleren kann, ob beispielsweise Fremdstoffe wie z.B. Klebefolien (TESA®) oder andere unerwünschte Gegenstände, Verschmutzungen oder Beschädigungen in bzw. an der Flasche vorhanden sind.

Hierzu ist die zumindest erste Kamera auf einen Bodenbereich der beispielhaften Flasche ausgerichtet, so dass auch nur der Bodenbereich bzw. der Flaschenboden von innen inspiziert wird. Mittels einer zweiten Inspektionsvorrichtung, ist es möglich einen Innenwandbereich der beispielhaften Flasche auf unerwünschte Gegenstände, Verschmutzungen oder Beschädigungen zu inspizieren. Wird mit beiden Inspektionsvorrichtungen detektiert, dass unerwünschte Gegenstände in der beispielhaften Flasche vorhanden sind, oder dass die Flasche Verschmutzungen oder Beschädigungen in bzw. an dem inspizierten Bereich aufweist, wird die betreffende Flasche aussortiert. Hierzu sind entsprechende Mittel vorgesehen, welche einen Bildabgleich bzw eine Bildverarbeitung des von den Kameras aufgenommen Bildes durchführen, und ein entsprechendes Signal an geeignete Sortiervorrichtungen senden. Bekannt ist auch, das Innere der beispielhaften Flasche auf Flüssigkeitsrückstände oder dergleichen zu inspizieren, wozu eine entsprechende, beispielsweise eine Infrarotlicht verarbeitende Kamera vorgesehen werden kann. Die Inspektionsvorrichtungen inspizleren den betreffenden Bereich (Boden und/oder Innenwand) aber jeweils nur einmal.

Aus der DE 10 2006 047 150 A1 ist eine Inspektionsvorrichtung bekannt, bei der mittels zwei Beleuchtungseinheiten ein Behälter mit Licht unterschiedlicher charakteristischer Eigenschaften bestrahlt wird, wobei die Bestrahlung und Erfassung zeitversetzt erfolgt. Ein Inspektionsverfahren mit einer Vielzahl von ortsfesten Kameras offenbart die WO 2006/011803 A, wobei diese vorschlägt, 60 oder mehr Bilder von dem bewegten und durchleuchteten Behälter zu erzeugen und durch eine geeignete Bildauswertung Fremdstoffe im Behälter zu detektieren. Schließlich lehrt die DE 101 64 058 A1 mittels einer Inspektionseinheit Behälter zu überprüfen, bei der zwei Bildaufnahmeeinrichtungen vorgesehen sind, die je eine durch einen polarisierenden Strahlteiler erzeugte Teilstrahlenmenge empfangen, wobei die Bildaufnahmeeinrichtungen an einem Kanal rechtwinklig zueinander angeordnet sind.

Hierbei können Fehler auftreten, so dass möglicherweise nur eine unzuverlässige Aussage über den inspizierten Bereich hinsichtlich unerwünschter Gegenstände, Verschmutzungen und/oder Beschädigungen getroffen werden kann. Zudem ist der Einsatz mehrerer aufeinander folgender Inspektionsvorrichtungen dahingehend nachteilig, als die jeweilige Flasche oder dergleichen Behälter eine Vielzahl von Inspektionsvorrichtungen durchlaufen muss, um die definierten Innenbereiche inspizieren zu können.

Der Erfindung liegt daher die Aufgabe zugrunde, Flaschen oder dergleichen Behälter kostengünstiger zu inspizieren, wobei eine Inspektionsvorrichtung der Eingangs genannten Art mit einfachen Mitteln so verbessert werden soll, dass der definierte, zu inspizierende Bereich der Flasche oder dergleichen Behälter zuverlässiger kontrolliert werden kann.

Erfindungsgemäß wird die Aufgabe durch eine Inspektionsvorrichtung mit den Merkmalen des Anspruchs 1 gelöst, wobei die zumindest eine Kamera an einem optischen Kanal angeordnet ist, der zumindest eine zweite Kamera aufweist, welche denselben Bereich inspiziert wie die zumindest erste Kamera, und wobei an dem optischen Kanal zumindest eine dritte und vierte Kamera angeordnet ist, welche einen weiteren Innenbereich der Flasche oder dergleichen Behälter gemeinsam inspizieren.

Mittels der Erfindung wird vorteilhaft eine einzige Inspektionsvorrichtung zur Verfügung gestellt, welche den jeweils definierten, zu inspizierenden Bereich zumindest zweimal auf unerwünschte Gegenstände, Verschmutzungen im Inneren der Flasche oder dergleichen Behälter und/oder auf Beschädigungen kontrolliert, indem eine zweite, zusätzliche Kamera den von der ersten Kamera inspizierten Bereich inspiziert. Mit anderen Worten sind beide Kameras, also die zumindest erste Kamera und die zusätzliche zweite Kamera, auf ein und denselben Bereich, also auf den definierten zu inspizierenden Bereich so eingestellt, dass die jeweilige Kamera unabhängig von der jeweils anderen den zu inspizierenden Bereich gleichzeitig kontrolliert. Dadurch können zwei Bilder des definierten, zu inspizierenden Bereiches aufgenommen und verarbeitet werden, so dass die Aussagezuverlässigkeit, beispielsweise hinsichtlich dem Vorhandensein unerwünschter Gegenstände im Inneren der Flasche oder dergleichen Behälter und/oder hinsichtlich Beschädigungen bezogen auf eine einmalige Inspektion erheblich gesteigert ist.

Da beide Kameras zudem zweckmäßiger Weise an dem optischen Kanal angeordnet sind, wird günstiger Weise noch eine sehr komplexe Inspektionsvorrichtung bereitgestellt. Auf die Ausgestaltung des optischen Kanals wird weiter unten näher eingegangen.

Die beiden Kameras können in einer Längsrichtung des optischen Kanals gesehen über einander und seitlich an dem optischen Kanal angeordnet sein. Denkbar ist auch, dass die beiden Kameras bezogen auf eine Mittelachse des optischen Kanals gegenüberliegend angeordnet sind.

Mit den beiden Kameras kann beispielsweise der Boden der beispielhaften Flasche zuverlässig inspiziert werden. In bevorzugter Ausgestaltung der Erfindung sind an dem optischen Kanal zwei weitere Kameras, also die dritte und vierte Kamera angeordnet, welche einen anderen, definierten Bereich der beispielhaften Flasche inspizieren, beispielsweise deren Seitenwand. Diese beiden Kameras können ebenso seitlich an dem optischen Kanal und in seiner Längsrichtung gesehen über einander angeordnet sein.

Denkbar ist hierbei jede sinnvolle Aufeinanderfolge der vier Kameras, wobei beispielsweise die in Längsrichtung gesehen unteren beiden Kameras seitlich gegenüberliegend den Boden inspizieren und die anderen beiden die Seitenwand der beispielhaften Flasche.

In weiter bevorzugter Ausgestaltung kann an dem optischen Kanal zu dem eine Infrarotlicht verarbeitende Kamera angeordnet sein, welche zum Beispiel Flüssigkeitsreste im Inneren der beispielhaften Flasche zuverlässig detektieren kann.

Um die jeweils möglichen Anordnungen der bevorzugter Weise fünf Kameras optisch verwirklichen zu können, ist in zweckmäßiger Ausgestaltung vorgesehen, dass der optische Kanal im Längsschnitt gesehen bevorzugt rechteckig ausgeführt ist und optische Elemente aufweist. Natürlich kann jede andere geeignete geometrische Ausgestaltung für den optischen Kanal gewählt werden. Die optischen Elemente sind als Strahlteiler (sog. Beamsplitter) ausgeführt.

An seiner zur beispielhaften Flasche orientierten Sichtseite weist der optische Kanal vorzugsweise zwei in Längsrichtung gesehen über einander angeordnete Linsen auf. Dies bedeutet, dass sowohl der Boden (zwei Kameras) als auch die Seitenwand (zwei Kameras) der beispielhaften Flasche mit der erfindungsgemäßen einzigen Inspektionsvorrichtung inspizierbar ist.

Im Inneren des optischen Kanals sind die Strahlteiler angeordnet, wobei jeder seitlich angeordneten Kamera jeweils ein Strahlteiler zugeordnet ist. Strahlteiler im Sinne der Erfindung sind teilweise durchlässige optische Elemente, welche (Licht-)Strahlen teilweise durchlassen und teilweise reflektieren. Die Strahlteiler sind demnach in bevorzugter Ausgestaltung in Längsrichtung gesehen über einander angeordnet, wobei diese günstiger Weise unterschiedliche Durchgangswerte und Reflexionswerte aufweisen, damit auch die in Längsrichtung gesehen letzte Kamera das Innere der beispielhaften Flasche noch hinreichend inspizieren kann. Beispielsweise weist der in Längsrichtung von der Sichtseite gesehen erste Strahlteiler einen geringen Reflexionswert und einen hohen Durchgangswert (z.B. 30/70) auf, wobei der in Längsrichtung bezogen auf die Sichtseite letzte Strahlteiler einen bezogen auf den ersten Strahlteiler höheren Reflexionswert und einen geringeren Durchgangswert (z.B: 60/40) aufweist. Die dazwischen angeordneten Strahlteiler sind in ihren Durchgangs- und Reflexionswerten entsprechend angepasst. Insofern können die Strahlteiler auch als durchlässige Spiegel bezeichnet werden. Die Strahlteiler sind so ausgeführt, dass Infrarotlicht nicht reflektiert wird, also für Infrarotlicht komplett durchlässig ist.

Zweckmäßiger Weise ist, wie bereits beschrieben, jeder seitlich angeordneten Kamera ein Strahlteiler zugeordnet, welcher jeweils Strahlen in Richtung zur jeweiligen, korrelierenden Kamera reflektiert, so dass der betreffende Innenbereich der beispielhaften Flasche (Boden/Seitenwand) von der jeweils korrespondierenden Kamera aufgenommen werden kann. Günstig im Sinne der Erfindung ist weiter, wenn zumindest jeder der seitlich angeordneten Kamera noch zusätzlich eine optische Linse zugeordnet ist, so dass die jeweilige Kamera an die entsprechende optische Länge anpassbar ist, bzw. dass die optischen Verhältnisse mittels der Linse für die entsprechende Kamera eingestellt werden können. Die den Kameras zugeordnete Linse kann in einem Gehäuse (close up) angeordnet sein, welches zwischen den jeweiligen Kameras und der Seitenwand des optischen Kanals angeordnet sein kann.

Insgesamt wird mit der Erfindung eine einzige Inspektionsvorrichtung zur Verfügung gestellt, welche bei einem komplexen Aufbau eine zuverlässige Kontrolle definierter Bereiche der beispielhaften Flasche ermöglicht, indem zum einen der innere Boden und zum anderen die innere Seitenwand der beispielhaften Flasche jeweils doppelt aufgenommen wird, wobei aber lediglich eine einzige Inspektionsvorrichtung erforderlich ist. Vorteilhaft muss die Flasche oder dergleichen Behälter dabei nicht in Rotation versetzt werden, da der optische Kanal mit seinen optischen Elementen ein vollständiges Bild in Radialrichtung des jeweiligen Bereiches ermöglicht. Vorteilhaft ist weiter, dass die beiden Kameras, welche jeweils den gleichen Innenbereich (Boden/Seitenwand) inspizieren, mit unterschiedlichen Polarisierungen betrieben werden können, so dass eine im Hellfeld und die andere im Dunkelfeld betrieben werden kann. Mittels der Dunkelfeldinspektion sind Folien leichter erkennbar. Natürlich liegt es im Sinne der Erfindung auch mehr als die genannten fünf Kameras an dem optischen Kanal anzuordnen, so dass weitere Bereiche als die beschriebenen Innebereiche inspiziert werden können.

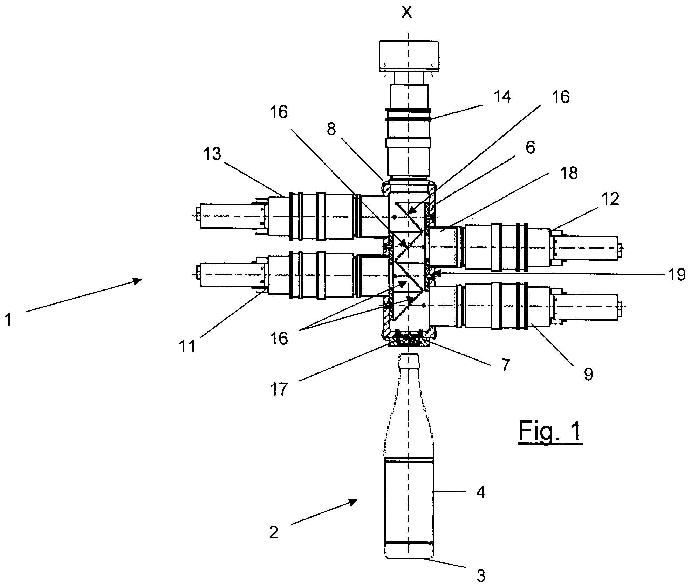

Weitere vorteilhafte Ausgestaltungen der Erfindung sind in den Unteransprüchen und der folgenden Figurenbeschreibung offenbart. Es zeigt die einzige
Fig. 1 eine erfindungsgemäße Inspektionsvorrichtung mit an einem optischen Kanal angeordneten Kameras.

Figur 1 zeigt eine Inspektionsvorrichtung 1 zur Kontrolle von Flaschen 2 oder dergleichen Behälter. Im nachfolgenden werden Flaschen 2 oder dergleichen Behälter allgemein als Flasche 2 bezeichnet.

Die Flasche 2 weist einen Boden 3 und eine Seitenwand 4 auf. Gegenüberliegend zum Boden 2 ist eine Mündungsöffnung angeordnet. Mit der Inspektionsvorrichtung 1 soll bevorzugt das Innere der Flasche 2 bevorzugt nach ihrer Reinigung auf unerwünschte Gegenstände, Verschmutzungen und/oder Beschädigungen kontrolliert werden. Insofern kann auch von einer Leerflascheninspektion gesprochen werden.

Die Inspektionsvorrichtung 1 umfasst eine nicht dargestellte Beleuchtungseinrichtung. Die Beleuchtungseinrichtung ist in dem beispielhaften Ausführungsbeispiel unterhalb der Flasche 2 angeordnet, welche beispielhaft schwebend an der Beleuchtungseinrichtung vorbeitransportiert wird. Die Beleuchtungseinrichtung durchleuchtet die Flasche 2 von unten.

Die Inspektionsvorrichtung 1 weist in dem dargestellten Ausführungsbeispiel einen optischen Kanal 6 auf. Der optische Kanal 6 ist im Längsschnitt gesehen rechteckig mit einer Sichtseite 7 und einer dazu gegenüberliegenden Kopfseite 8 ausgeführt.

Jeweils seitlich des optischen Kanals 6 sind vier Kameras 9, 11 12 und 13 angeordnet. Eine fünfte Kamera 14 ist an der Kopfseite 8 angeordnet. Die Kameras 9 und 12 sowie 11 und 13 sind in Längsrichtung des optischen Kanals 6 gesehen über einander angeordnet. Bezogen auf eine Mittelachse X des optischen Kanals 6 sind zwei Kameras 9 und 12 an der in der Zeichnungsebene rechten Seite und die beiden anderen Kameras 11 und 13 an der in der Zeichnungsebene linken Seite des optischen Kanals 6 angeordnet.

Jeweils zwei der vier seitlich angeordneten Kameras 9 bis 13 kontrollieren gemeinsam definierte Innenbereiche der Flasche 2. Beispielsweise kontrollieren die Kameras 9 und 12 den Bodenbereich, wobei die Kameras 11 und 13 die Seitenwand kontrollieren. Es werden also mit einer einzigen Inspektionsvorrichtung 1 jeweils zwei Aufnahmen von dem jeweiligen definierten, zu inspizierenden Bereich aufgenommen.

Natürlich ist die genannte Reihenfolge der Kameras 9 bis 13 lediglich beispielhaft zu verstehen. So ist es möglich im Sinne der Erfindung, dass die Kameras 9 und 11 bzw. 9 und 13 den Bodenbereich oder die Seitenwand und die Kameras 12 und 13 bzw. 11 und 12 den jeweils anderen Bereich inspizieren.

Die kopfseitig angeordnete, fünfte Kamera 14 kontrolliert ob sich unerwünschte Flüssigkeitsreste in der Flasche 2 befinden.

Um die jeweiligen Kameras 9 bis 14 mit den gewünschten Informationen versorgen zu können, sind in dem optischen Kanal 6 optische Elemente angeordnet, welche als Strahlteiler 16 (Beamsplitter) oder optische Linsen 17 ausgeführt sind. Insofern kann der optische Kanal 6 auch als optischer Turm bezeichnet werden, an dem die fünf Kameras 9 bis 14 und die optischen Elemente 16 und 17 angeordnet sind.

An der Sichtseite 7 sind in dem dargestellten Ausführungsbeispiel zwei in Längsrichtung über einander angeordnete Linsen 17 angeordnet. Zumindest jeder der seitlich angeordneten Kameras 9 bis 13 ist jeweils eine weitere, nicht dargestellte Linse zugeordnet, welche jeweils in einem Gehäuse 18 angeordnet sind. Das Gehäuse 18 ist zwischen einer Seitenwand 19 des optischen Kanals 6 und der jeweiligen Kamera 9 bis 13 angeordnet.

Zudem ist jeder der seitlich angeordneten Kameras 9 bis 13 jeweils ein Strahlteiler 16 zugeordnet. Die Strahlteiler 16 sind so ausgeführt, dass auch die in Längsrichtung gesehen letzte Kamera mit Informationen versorgt werden kann. Das bedeutet, dass die in Längsrichtung aufeinander folgenden Strahlteiler 16 bevorzugt jeweils unterschiedliche Durchgangs- bzw. Reflexionswerte aufweisen.

Im Bereich der Kameras 9 bis 14 sind natürlich entsprechende Öffnungen in der Seitenwand 19 bzw. der Kopfseite 8 vorgesehen.

Mittels der erfindungsgemäßen einzigen Inspektionsvorrichtung 1 kann so in vorteilhafter Weise eine zuverlässige Inspektion des Inneren der Flasche 2 durchgeführt werden. Hierzu sind jeweils zwei Kameras vorgesehen, welche jeweils denselben, definierten Bereich der Flasche 2 inspizieren. Zwei weitere Kameras kontrollieren einen anderen definierten Innenbereich der Flasche 2. Insofern wird eine sehr komplexe Inspektionsvorrichtung 1 zur Verfügung gestellt, mit der unterschiedliche Inspektionsbereiche der Flasche zuverlässig kontrollierbar sind. Der optische Kanal 6 ist dabei günstiger Weise mit optischen Elementen versehen, so dass die jeweils korrelierenden Kameras mit der jeweils entsprechenden Information versorgt werden können.

### Bezugszeichenliste

- 1: Inspektionsvorrichtung
- 2: Flasche
- 3: Boden
- 4: Seitenwand von 2
- 5:
- 6: optischer Kanal
- 7: Sichtseite
- 8: Kopfseite
- 9: Kamera
- 10:
- 11: Kamera
- 12: Kamera
- 13: Kamera
- 14: Kamera
- 15:
- 16: Strahlteiler
- 17: optische Linse
- 18: Gehäuse
- 19: Seitenwand von 6

## Patentansprüche

1. Inspektionsvorrichtung zum Kontrollieren von Flaschen (2) oder dergleichen Behälter, umfassend zumindest eine erste Kamera (9), welche einen definierten Bereich der Flasche (2) oder dergleichen Behälter kontrolliert, wobei die zumindest eine Kamera (9) an einem optischen Kanal (6) angeordnet ist, an dem zumindest eine zweite Kamera (12) angeordnet ist wobei Strahlteiler (16), welche für Lichtstrahlen teilweise durchlässig und teilweise reflektierend sind, vorgesehen sind, und wobei die zumindest zweite Kamera (12) denselben definierten Bereich inspiziert wie die zumindest erste Kamera (9), wobei an dem optischen Kanal (6) zumindest eine dritte und vierte Kamera (11,13) angeordnet sind, welche einen weiteren, definierten Bereich gemeinsam inspizieren, und wobei die Strahlteiler (16) im inneren des optischen Kanals (6) derart angeordnet sind, dass jeder seitlich angeordneten Kamera (9, 11, 12, 13) jeweils einen Strahlteiler (16) zugeordnet ist.

2. Inspektionsvorrichtung nach Anspruch 1, **dadurch gekennzeichnet, dass** die zumindest beiden Kameras (9, 11, 12, 13), welche denselben, definierten Bereich inspizieren, in einer Längsrichtung des optischen Kanals (6) gesehen über einander seitlich an dem optischen Kanal (6) angeordnet sind.

3. Inspektionsvorrichtung nach Anspruch 1 oder 2, **dadurch gekennzeichnet, dass** die beiden Kameras (9, 11, 12, 13), welche denselben, definierten Bereich inspizieren, bezogen auf eine Mittelachse (X) des optischen Kanals (6) gegenüberliegend angeordnet sind.

4. Inspektionsvorrichtung nach einem der vorhergehenden Ansprüche, **dadurch gekennzeichnet, dass** an einer Kopfseite (8) des optischen Kanals (6) eine weitere Kamera (14) angeordnet ist, welche Infrarotlichtaufnahmen durchführt.

5. Inspektionsvorrichtung nach einem der vorhergehenden Ansprüche, **dadurch gekennzeichnet, dass** der optische Kanal (6) im Längsschnitt gesehen rechteckig ausgeführt ist und die Strahlteiler (16) aufweist.

6. Inspektionsvorrichtung nach einem der vorhergehenden Ansprüche **dadurch gekennzeichnet, dass** der optische Kanal (6) an seiner Sichtseite (7) zumindest eine, bevorzugt zwei in Längsrichtung über einander angeordnete optische Linsen (17) aufweist.

7. Inspektionsvorrichtung nach einem der vorhergehenden Ansprüche **dadurch gekennzeichnet**, dassjeder Kamera (9, 11, 12, 13) jeweils eine optische Linse (17) zugeordnet ist.

## Claims

1. Inspection device for checking bottles (2) or similar containers, comprising at least one first camera (9), which checks a defined region of the bottle (2) or similar container, wherein the at least one camera (9) is arranged on an optic channel (6), on which at least one second camera (12) is arranged, wherein beam dividers (16) are provided which are partially permeable for light beams and are partially reflective, and wherein the at least one second camera (12) inspects the same defined region as at least the first camera (9), wherein at least one third and fourth camera (11, 13) are arranged on the optical channel (6), which together check a further defined region, and wherein the beam dividers (16) are arranged in the interior of the optical channel (6) in such a way that each laterally arranged camera (9, 11, 12, 13) is allocated in each case to a beam divider (16).

2. Inspection device according to claim 1, **characterised in that** the at least two cameras (9, 11, 12, 13) which inspect the same defined region, seen in a longitudinal direction of the optical channel (6), are arranged above one another laterally at the optical channel (6).

3. Inspection device according to claim 1 or 2, **characterised in that** the two cameras (9, 11, 12, 13) which inspect the same defined region are arranged opposite one another in relation to a mid-axis (X) of the optical channel (6).

4. Inspection device according to any one of the preceding claims, **characterised in that** a further camera (14) which takes infra-red images is arranged on a head side (8) of the optical channel (6).

5. Inspection device according to any one of the preceding claims, **characterised in that** the optical channel (6) is configured as rectangular, seen in longitudinal section, and comprises the beam dividers (16).

6. Inspection device according to any one of the preceding claims, **characterised in that** the optical channel (6) comprises on its sighting side (7) at least one and preferably two optical lenses (17), arranged above one another in the longitudinal direction.

7. Inspection device according to any one of the preceding claims, **characterised in that** in each case an optical lens (17) is allocated to each camera (9, 11, 12, 13).

## Revendications

1. Dispositif d'inspection servant à contrôler des bouteilles (2) ou des contenants similaires, comprenant au moins une première caméra (9), qui contrôle une zone définie de la bouteille (2) ou des contenants similaires, dans lequel l'au moins une caméra (9) est disposée au niveau d'un canal (6) optique, au niveau duquel une deuxième caméra (12) est disposée, dans lequel sont prévus des séparateurs de faisceaux (16), qui laissent passer en partie des faisceaux de lumière et qui sont en partie réfléchissants, et dans lequel l'au moins une deuxième caméra (12) inspecte la même zone définie que l'au moins une première caméra (9), dans lequel au moins une troisième et une quatrième caméra (11, 13) sont disposées au niveau du canal optique (6), lesquelles inspectent conjointement une autre zone définie, et dans lequel les séparateurs de faisceaux (16) sont disposés de telle manière dans l'espace intérieur du canal (6) optique que respectivement un séparateur de faisceaux (16) est associé à chaque caméra (9, 11, 12, 13) disposée sur le côté.

2. Dispositif d'inspection selon la revendication 1, **caractérisé en ce que** les au moins deux caméras (9, 11, 12, 13), qui inspectent la même zone définie, sont disposées, vues dans un sens longitudinal du canal (6) optique, latéralement au niveau du canal (6) optique les unes au-dessus des autres.

3. Dispositif d'inspection selon la revendication 1 ou 2, **caractérisé en ce que** les deux caméras (9, 11, 12, 13), qui inspectent la même zone définie, sont disposées de manière à se faire face par rapport à un axe central (X) du canal (6) optique.

4. Dispositif d'inspection selon l'une quelconque des revendications précédentes, **caractérisé en ce qu'**est disposée, au niveau d'un côté de tête (8) du canal (6) optique, une autre caméra (14), qui réalise des captations de la lumière infrarouge.

5. Dispositif d'inspection selon l'une quelconque des revendications précédentes, **caractérisé en ce que** le canal (6) optique est réalisé, vu dans la coupe longitudinale, de manière rectangulaire et présente les séparateurs de faisceaux (16).

6. Dispositif d'inspection selon l'une quelconque des revendications précédentes, **caractérisé en ce que** le canal (6) optique présente, au niveau de son côté visible (7), au moins une, de manière préférée deux lentilles (17) optiques disposées l'une au-dessus de l'autre dans le sens longitudinal.

7. Dispositif d'inspection selon l'une quelconque des revendications précédentes, **caractérisé en ce que** respectivement une lentille (17) optique est associée à chaque caméra (9, 11, 12, 13).
